# FASCICULE DE BREVET EUROPEEN

(11) **EP 0 907 549 B1**
(45) Date de publication et mention de la délivrance du brevet: **29.08.2001**
(21) Numéro de dépôt: 96924032.4
(22) Date de dépôt: 28.06.1996
(51) Int. Cl.: B62M 1/12, B62M 1/04, B62K 3/00

(54) **ENGIN, TEL QUE NOTAMMENT CYCLE, A PROPULSION HUMAINE**
DURCH MUSKELKRAFT ANGEBTRIEBENEN FAHRZEUG, INSBESONDERE FAHRRAD
MAN-PROPELLED VEHICLE, SUCH AS IN PARTICULAR A CYCLE

(43) Date de publication de la demande: 14.04.1999
(73) Titulaire: Dallet, Etienne, 32370 Manciet (FR)
(72) Inventeur: Dallet, Etienne, 32370 Manciet (FR)
(74) Mandataire: Cabinet BARRE LAFORGUE & associés
(86) Numéro de dépôt international: FR9601005
(87) Numéro de publication internationale: WO9800332

(56) Documents cités:
- EP-A- 0 069 932
- DE-A- 4 415 611
- FR-A- 2 728 532
- US-A- 4 928 986
- US-A- 5 280 936

## Description

L'invention concerne un engin, tel que notamment cycle, à propulsion humaine, comportant un châssis longitudinal doté, vers une de ses extrémités, d'une assise dotée d'un dossier et, vers son extrémité opposée, d'un système de pédales apte à être activé avec les pieds par un utilisateur en position assise avec le dos maintenu par le dossier, ledit système de pédales étant associé à des moyens de transmission le reliant à un arbre moteur, aptes à transformer le mouvement de ce système de pédales en un mouvement de rotation dudit arbre moteur.

De tels engins, décrits notamment dans les brevets FR 811 916 et BE 432 336, en ce qui concerne les cycles, présentent l'avantage d'offrir à l'utilisateur une position "semi-allongée" confortable, tout en requérant un effort similaire ou même moindre par rapport aux cycles classiques.

Toutefois, de tels cycles ne permettent pas d'optimiser le rendement des efforts fournis par l'utilisateur en raison des "points morts", inhérents à leur conception, qui correspondent à des positions des pédales où l'effort transmis est réduit voire nul.

Il est à noter, par ailleurs, qu'à l'heure actuelle, la plupart des cycles commercialisés conçus pour être utilisés en position assise sont dotés d'un pédalier classique généralement disposé à l'avant de l'engin. De même que ceux précités, et du fait de la conception des pédaliers, ces cycles présentent des "points morts" qui ne permettent pas d'optimiser le rendement des efforts.

En vue de pallier cet inconvénient, un autre type d'engin tel que notamment décrit dans EP-0069932 comprend :
* un système de pédales comportant deux pédales reliées au châssis par des moyens d'actionnement aptes à permettre de leur conférer un mouvement alternatif de translation,
* des moyens de transmission comportant, pour chaque pédale, un organe rotatif de transmission unidirectionnel associé à des moyens de rappel élastique, porté par l'arbre moteur et relié aux moyens d'actionnement par un élément de liaison adapté pour entraîner en rotation ledit organe rotatif et l'arbre moteur, lors des déplacements de ladite pédale selon une direction d'éloignement de cette dernière par rapport à l'assise,
* au moins une roue arrière motrice dotée d'un axe équipé d'une roue libre reliée par une chaîne à au moins un plateau solidaire de l'arbre moteur, et une roue avant dotée d'un axe monté sur une fourche solidaire d'un tube de direction.

Toutefois, de tels cycles ne possèdent pas une grande souplesse d'utilisation. De plus, en vue de négocier les virages, ces cycles imposent d'incliner le guidon par rapport à l'axe longitudinal desdits cycles, de sorte qu'il est impossible d'utiliser ce guidon en tant qu'élément de propulsion à actionnement manuel et de maîtriser simultanément l'angle de braquage de la roue directrice.

La présente invention vise à pallier l'ensemble des inconvénients ci-dessus décrits, et a pour principal objectif de fournir un engin optimisant le rendement des efforts fournis.

Un autre objectif est de fournir un engin de conception simple présentant en outre un faible encombrement.

Un autre objectif est de fournir un engin qui, dans sa conception cycle, peut facilement être équipé de volumes de rangement pour le transport de tout type d'ustensiles.

A cet effet, l'invention vise un engin, tel que notamment cycle, tel que décrit ci-dessus, se caractérisant en ce qu'il comporte :
- deux manettes indépendantes à actionnement manuel, reliées au châssis par des moyens d'actionnement aptes à permettre de leur conférer un mouvement alternatif de translation, les moyens d'actionnement de chaque manette étant reliés à un organe rotatif de transmission unidirectionnel associé à des moyens de rappel élastique et porté par l'arbre moteur, par un élément de liaison adapté pour entraîner en rotation ledit organe rotatif et l'arbre moteur, lors des déplacements de ladite manette selon une direction d'éloignement par rapport à l'assise,
- deux poignées articulées respectivement chacune vers l'extrémité supérieure d'une des manettes, de façon à pouvoir pivoter autour d'un axe longitudinal, lesdites poignées étant reliées à une barre de manoeuvre solidaire du tube de direction au moyen d'éléments de liaison adaptés pour provoquer la rotation desdites barre de manoeuvre et tube de direction autour d'un axe vertical.

En premier lieu, un tel engin permet d'utiliser de façon optimale la puissance musculaire développée par les quatre membres de l'utilisateur. En effet, chaque membre entraîne un déplacement alternatif en translation d'une pédale ou d'une manette et anime l'organe de transmission associé qui est actif dans un seul sens de rotation. Ainsi, cet engin permet d'obtenir une force développée très supérieure à celle obtenue avec les engins actuels.

Par ailleurs, il convient de noter la simplicité de la conception de cet engin comportant un châssis, des moyens d'actionnement mobiles relativement audit châssis, et un organe de transmission unidirectionnel relié à chaque pédale et à chaque manette.

Enfin, il est à noter la totale indépendance entre l'action des différents membres qui autorise toutes libertés d'utilisation.

Selon une autre caractéristique de l'invention, les moyens d'actionnement comprennent, pour chaque pédale et chaque manette, un chariot monté coulissant le long du châssis.

De plus, les deux chariots de chaque paire de chariots sont préférentiellement reliés entre eux par un élément de liaison souple associé à un organe de renvoi solidaire du châssis, disposé de façon à maintenir tendu ledit élément de liaison dans des positions des chariots où ces derniers sont situés symétriquement de part et d'autre du point médian de leur trajet.

Ainsi, à l'effort de poussée engendré par un membre, jambe ou bras, lors de son extension, s'ajoute l'effort de traction de l'autre membre, lorsque ce dernier est replié en synchronisation avec l'extension dudit premier membre.

En outre, selon un mode de réalisation préférentiel, l'engin comprend des éléments élastiques de fin de course disposés de façon à servir de butée aux chariots dans la position de ces derniers la plus éloignée de l'assise.

Ces butées élastiques ont pour fonction d'accumuler la puissance fournie musculairement en fin d'extension des membres, puissance qui s'avère maximale, et de restituer l'énergie accumulée au début de la phase retour des chariots qui correspond à une puissance musculaire fournie inférieure.

De même, l'engin comprend préférentiellement des éléments élastiques de fin de course disposés de façon à servir de butée aux chariots dans la position de ces derniers la plus rapprochée de l'assise.

De tels éléments élastiques permettent d'accumuler les forces de traction et de les restituer pour obtenir une poussée plus importante. Ils peuvent, en outre, être utilisés en association avec les éléments élastiques et les éléments de liaison souple précités.

De plus, toujours dans le but d'optimiser le rendement, chaque organe rotatif de transmission unidirectionnel présente avantageusement une forme sensiblement ovoïde, et est monté de façon excentrée sur l'arbre moteur de façon que la longueur du levier entre l'axe de rotation dudit arbre moteur et l'axe longitudinal de la force exercée sur le chariot soit inversement proportionnelle à la distance séparant ledit chariot de l'assise.

Ainsi, dans la position repliée des membres correspondant à une moindre force développée, l'effort à fournir pour provoquer la rotation des organes rotatifs se trouve inférieur à celui à fournir en fin d'extension où la force développée est maximale.

En outre, dans le cadre de l'application cycle, le plateau est préférentiellement monté sur l'arbre moteur par l'intermédiaire d'une roue libre adaptée pour permettre d'entraîner en rotation ledit arbre moteur uniquement lorsque l'engin est déplacé vers l'avant.

D'autres caractéristiques, buts et avantages de l'invention ressortiront de la description détaillée qui suit en référence aux dessins annexés, qui en représentent à titre d'exemples non limitatifs deux modes de réalisation préférentiels. Sur ces dessins qui font partie intégrante de la présente description :
- la figure 1 est une vue en perspective d'un cycle conforme à l'invention,
- la figure 2a en est une vue latérale,
- la figure 2b est un détail à échelle agrandie de la figure 2a,
- la figure 3 en est une coupe transversale par un plan vertical A, à échelle agrandie, représentant les chariots porte-pédales,
- la figure 4 est une vue de dessous partielle du châssis au droit du tube de direction,
- la figure 5 est un schéma de fonctionnement des moyens de manoeuvre du tube de direction,
- la figure 6 est une coupe longitudinale par un plan horizontal B de l'extrémité arrière du châssis de ce cycle.
- la figure 7 est une vue de dessus schématique d'une variante de réalisation d'un cycle conforme à l'invention, représenté sans siège et sans roue avant,
- et la figure 8 est une coupe transversale par un plan vertical C, à échelle agrandie, du chassis de cette variante de cycle.

Les cycles conformes à l'invention représentés à titre d'exemples aux figures sont des cycles à deux roues.

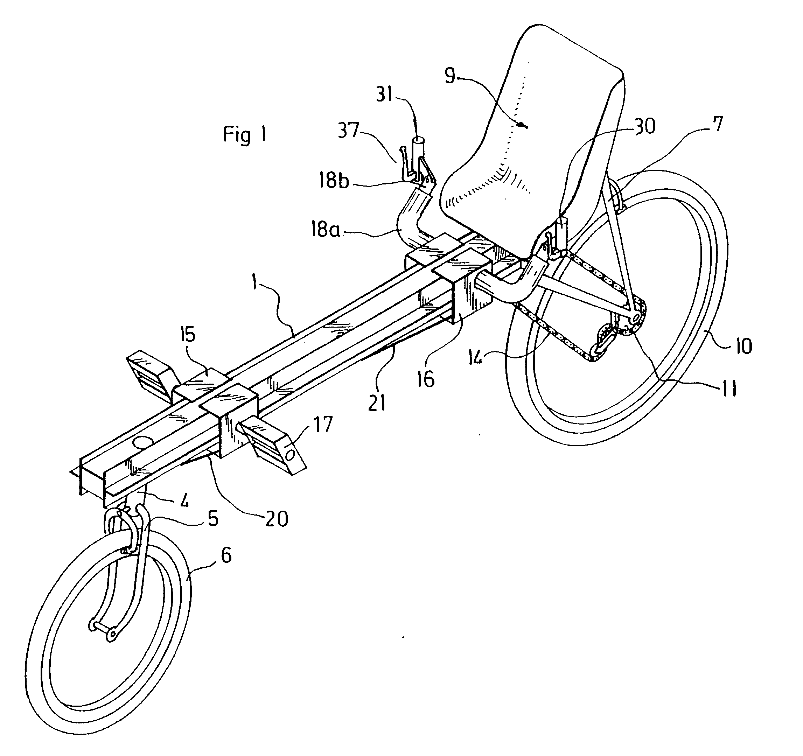

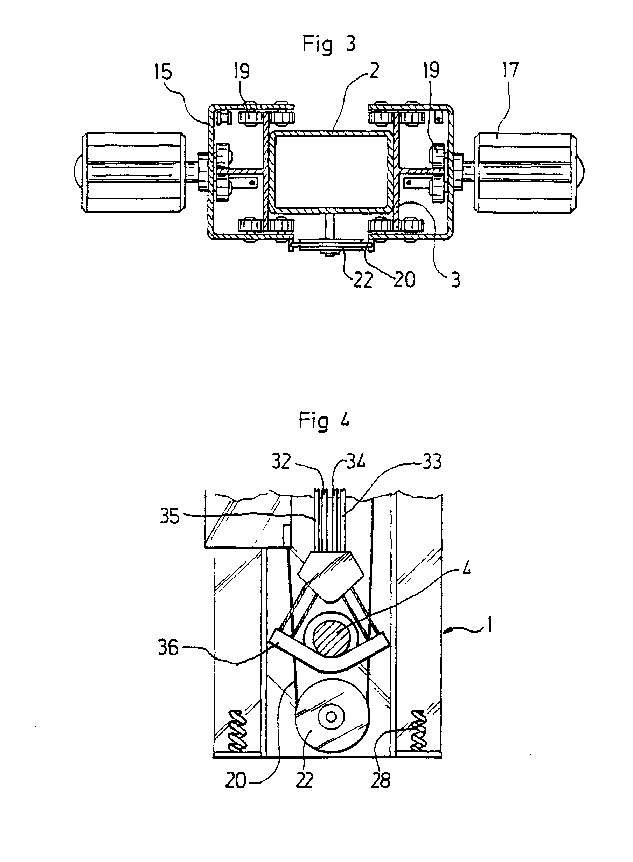

Le cycle représenté aux figures 1 à 6 comporte, en premier lieu, un châssis 1 composant un rail de guidage longitudinal, constitué d'un profilé tubulaire 2 de section rectangulaire, sur chacune des faces latérales duquel sont soudés deux profilés, tels que 3, en forme de T agencés pour que la branche dudit T s'étende orthogonalement par rapport à la face latérale correspondante du profilé tubulaire 2.

Ce châssis 1 porte, vers son extrémité avant, un tube de direction classique 4 dans le prolongement duquel s'étend une fourche 5 soutenant l'axe de la roue avant 6.

Vers son extrémité arrière, le châssis 1 est prolongé par deux cadres tubulaires tels que 7 parallèles, présentant chacun une forme générale triangulaire. Un des côtés de ces cadres définit un appui 8 pour le dossier 9a d'un siège 9 solidaire au niveau de son assise 9b du châssis 1, tandis que les deux autres côtés forment deux fourches s'étendant entre ledit appui 8 et l'axe de la roue arrière 10 dont ils soutiennent l'arbre portant la roue libre 11.

Ces deux cadres 7 sont reliés, au niveau de leurs sommets se trouvant sensiblement dans le prolongement arrière du chassis 1 par un arbre 12, dit moteur, monté dans des paliers, portant le ou les plateau(x) tels que 13 dudit cycle reliés classiquement à la roue libre 11 par une chaîne 14. Chaque plateau 13 est en outre monté sur l'arbre moteur 12 par l'intermédiaire d'une roue libre adaptée pour permettre de faire reculer le cycle.

Le long du châssis 1 sont montés coulissants quatre chariots identiques tels que 15, 16 associés deux à deux : deux chariots 15 à actionnement pédestre portant chacun une pédale telle que 17 et deux chariots 16 à actionnement manuel portant chacun une manette telle que 18.

Chacun de ces chariots 15, 16 est constitué d'un profilé en forme de U apte à coiffer un des profilés 3 en forme de T du châssis 1. De plus, chaque chariot 15, 16 porte trois paires de roulettes telles que 19 agencées pour venir au contact de part et d'autre respectivement de la branche et des deux ailes du profilé 3 du châssis, vers l'extrémité desdites branche et ailes.

De plus, les chariots 15 (ou 16) de chaque paire sont reliés par un câble 20 (ou 21) associé à une poulie de renvoi 22 (ou 23) à axe vertical solidarisée sous le châssis 1, agencés pour que tout déplacement d'un chariot dans un sens provoque le déplacement du chariot associée dans l'autre sens.

Par ailleurs, chacun des chariots 15, 16 est relié par un câble tel que 24, 25 de longueur réglable par tout moyen connu en soi, à une poulie de forme ovoïde telle que 26, 27 montée autour de l'arbre moteur 12, chacune desdites poulies constituant un organe rotatif de transmission unidirectionnel du type système à roue libre, et étant associée à un ressort de rappel intégré (non représenté).

La fonction de chacune de ces poulies ovoïdes 26, 27 est d'entraîner une rotation de l'arbre moteur 12, lors des déplacements en direction de la roue avant 6 du chariot 15, 16 associé. Lors du retour des chariots 15, 16 ces poulies ovoïdes 26, 27 sont inopérantes relativement à l'arbre moteur 12 et subissent une simple rotation sous l'action du ressort de rappel associé.

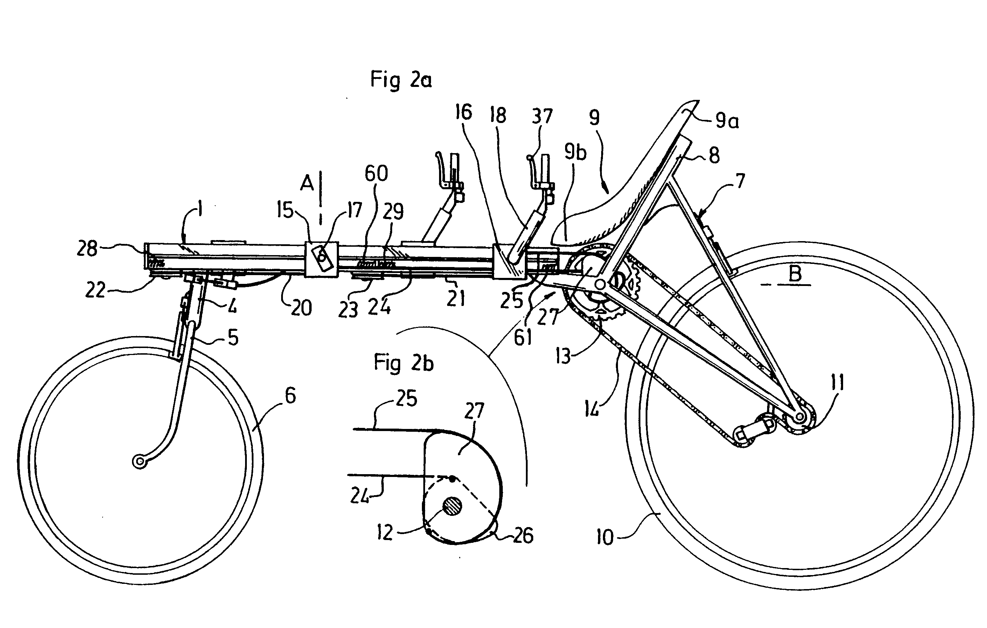

Par ailleurs, tel que représenté à la figure 2b, ces poulies ovoïdes 26, 27 sont montées excentrées par rapport à l'arbre moteur 12 de façon que le levier entre l'axe de cet arbre et l'axe de la force tendant à provoquer la rotation desdites poulies soit d'une longueur variable, avantageusement décroissante au fur et à mesure de l'avancée des chariots 15, 16.

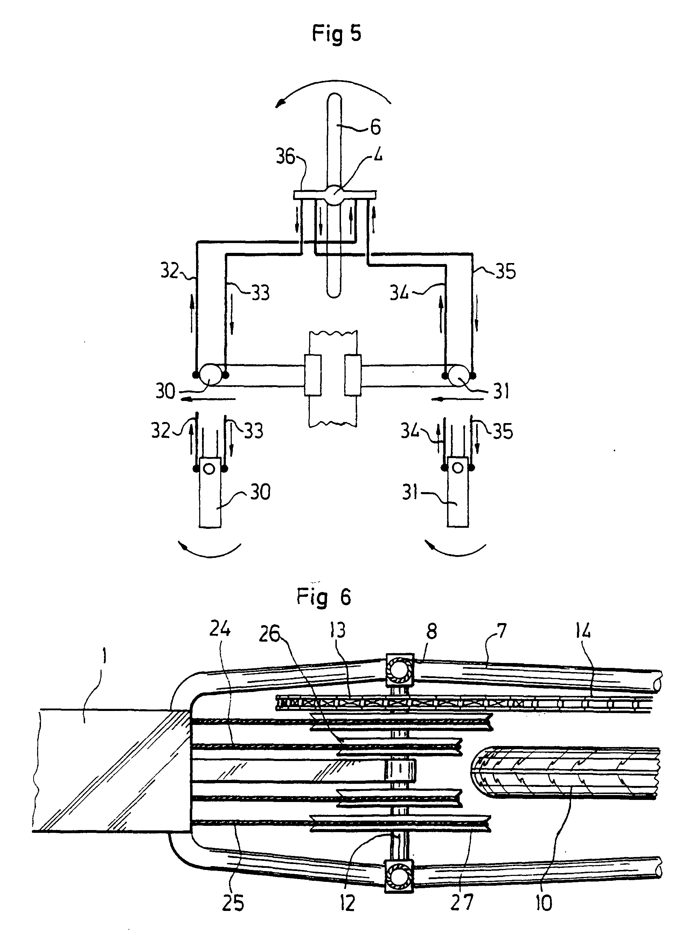

En outre, tel que représenté aux figures 2b et 6, les poulies ovoïdes 26 associées aux chariots 15 à actionnement pédestre sont plus petites que celles 27 associées aux chariots 16 à actionnement manuel.

En dernier lieu, concernant les chariots 15, 16, le châssis 1 porte des organes de butée élastique tels que 28, 29 disposés de façon à limiter la course vers l'avant desdits chariots et à exercer sur ces derniers un effort tendant à les repousser vers l'arrière.

De même, le châssis 1 porte des organes de butée élastique tels que 60, 61, disposés de façon à limiter la course vers l'arrière des chariots 15, 16 et à exercer sur ces derniers un effort tendant à les repousser vers l'avant.

La position longitudinale de ces organes de butée élastique 28, 29, 60, 61 peut en outre, être ajustée en fonction de la taille de l'utilisateur, de façon notamment à limiter l'angle de rotation des poulies ovoïdes 26, 27.

Par ailleurs, les manettes 18 présentent une structure télescopique et comportent un tronçon fixe 18a constitué d'un tube coudé, et un tronçon mobile 18b apte à permettre de régler la hauteur desdites manettes relativement au châssis 1.

Le tronçon mobile 18b de chacune de ces manettes 18 est en outre prolongé par une poignée 30, 31 articulée autour d'un axe longitudinal.

Chacune de ces poignées 30, 31 est solidaire de l'extrémité de deux câbles respectivement 32, 33 et 34, 35 fixés symétriquement de part et d'autre de l'axe d'articulation. L'extrémité opposée de ces câbles 32-35 est quant à elle solidaire d'une barre de manoeuvre horizontale 36 en forme de V solidaire du tube de direction 4.

Tel que représenté à la figure 5, les câbles 32-35 sont agencés pour que, lors du pivotement d'une poignée 30, 31, lesdits câbles provoquent la rotation de la barre de manoeuvre 36 dans l'un ou l'autre sens.

En dernier lieu, et de façon classique, les poignées 30, 31 sont équipées de poignées de frein telles que 37 et d'organes (non représentés) de commande du (ou des) dérailleur(s).

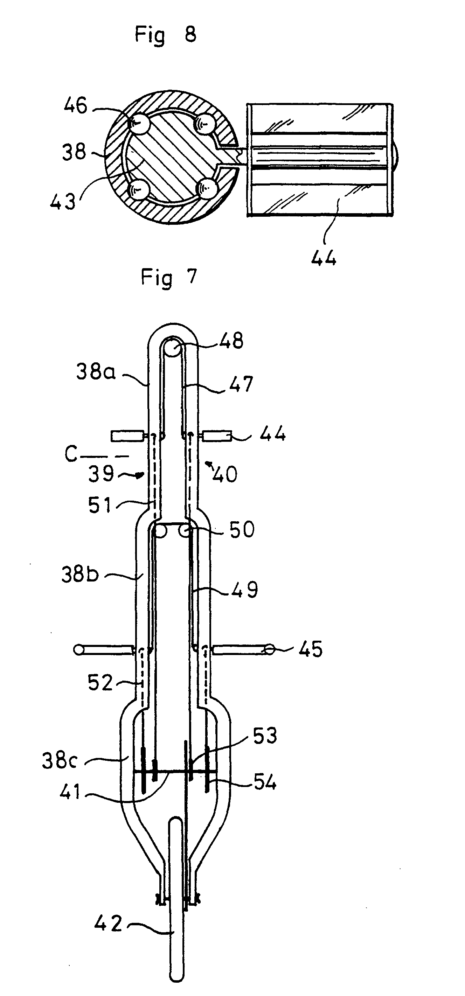

La figure 7 représente une variante selon laquelle le châssis est constitué d'un tube cylindrique creux 38 cintré de façon à présenter la forme d'une fourche dont l'extrémité coudée à 180 degrés constitue l'extrémité avant du cycle.

Les deux branches 39, 40 de cette fourche 38 sont, en outre, conformées de façon que ladite fourche présente, longitudinalement trois tronçons de largeurs différentes : un tronçon avant 38a de largeur minimale le long duquel les deux branches 39, 40 s'étendent parallèlement et sensiblement horizontalement, un tronçon intermédiaire 38b de largeur supérieure à celle du tronçon avant 38a, le long duquel les branches 39, 40 s'étendent également parallèlement et sensiblement horizontalement, et un tronçon arrière 38c de largeur maximale le long duquel les branches 39, 40 présentent une première portion de longueur où elles s'étendent parallèlement et où se trouve disposé l'arbre moteur 41, et une deuxième portion de longueur où elles convergent l'une vers l'autre de façon à porter, vers leur extrémité, l'arbre portant la roue libre de la roue arrière 42.

En outre, ce tronçon arrière 38c qui constitue la portion arrière du cycle portant notamment l'assise, est incliné vers le bas par rapport aux tronçons avant 38a et intermédiaire 38b.

Tel que représenté à la figure 8, chaque chariot 43 est constitué d'un chariot cylindrique logé dans le tube 38 du châssis, doté d'une patte de maintien de la pédale 44 ou de la manette 45, s'étendant au travers d'une fente longitudinale ménagée dans ledit tube.

De plus, ces chariots 43 et le tube 38 sont dotés, en regard, de cannelures longitudinales logeant des billes 46 de coulissement.

Tel que représenté à la figure 7, les chariots porte-pédales 44 sont disposés de façon à coulisser le long du tronçon avant 38a du châssis et sont reliés par un câble 47 associé à une poulie de renvoi 48 à axe vertical montée vers l'extrémité avant dudit châssis.

Les chariots porte-manettes 45 sont quant à eux disposés de façon à coulisser le long du tronçon intermédiaire 38b du châssis et sont reliés par un câble 49 associé à deux poulies de renvoi telles que 50 montées vers l'extrémité avant dudit tronçon intermédiaire.

Enfin, de même que pour le premier mode de réalisation, ces chariots 43 sont reliés par des câbles tels que 51, 52 à des poulies ovoïdes telles que 53, 54 portées par l'arbre moteur 41.

Il est à noter en outre, que le tube 38 peut présenter une forme arrondie autre que circulaire, et que les chariots 43 peuvent être montés coulissants autour de ce tube et non à l'intérieur de ce dernier. De plus, le coulissement peut être assuré, en lieu et place des billes 46, par un contact Téflon/Téflon (marque déposée), ou un contact fer/bronze avec graissage...

Tel que cela ressort des figures, de tels cycles ont pour avantage de présenter un faible encombrement. De plus, de par leur conception, d'une part, tous les câbles sont intégrés dans le plan du châssis et, d'autre part, un large volume est disponible en dessous de ce châssis permettant la mise en place de volumes de rangement.

En outre, de tels cycles peuvent être équipés de tous accessoires classiques tels que carénage...

## Revendications

1. Engin, tel que notamment du type cycle, à propulsion humaine, comportant :
- un châssis longitudinal (1 ; 38) doté, vers une de ses extrémités, d'une assise (9) dotée d'un dossier (9a) et, vers son extrémité opposée, d'un système de pédales indépendantes (17 ; 44) apte à être activé avec les pieds par un utilisateur en position assise avec le dos maintenu par le dossier (9a), ledit système de pédales étant associé à des moyens de transmission le reliant à un arbre moteur (12 ; 41), aptes à transformer le mouvement de ce système de pédales en un mouvement de rotation dudit arbre moteur,
* le système de pédales comportant deux pédales (17 ; 44) reliées au châssis (1 ; 38) par des moyens d'actionnement (15 ; 43) aptes à permettre de leur conférer un mouvement alternatif de translation,
* les moyens de transmission comportant, pour chaque pédale (17 ; 44), un organe rotatif de transmission unidirectionnel (26 ; 53) associé à des moyens de rappel élastique, porté par l'arbre moteur (12 ; 41) et relié aux moyens d'actionnement par un élément de liaison (24 ; 51) adapté pour entraîner en rotation ledit organe rotatif et l'arbre moteur (12 ; 41), lors des déplacements de ladite pédale selon une direction d'éloignement de cette dernière par rapport à l'assise (9),
- au moins une roue arrière motrice (10) dotée d'un axe équipé d'une roue libre (11) reliée par une chaîne (14) à au moins un plateau (13) solidaire de l'arbre moteur (12), et une roue avant (6) dotée d'un axe monté sur une fourche (5) solidaire d'un tube de direction (4),
ledit engin étant **caractérisé en ce qu**'il comporte :
- deux manettes indépendantes (18 ; 45) à actionnement manuel, reliées au châssis (1 ; 38) par des moyens d'actionnement (16 ; 43) aptes à permettre de leur conférer un mouvement alternatif de translation, les moyens d'actionnement de chaque manette (18 ; 45) étant reliés à un organe rotatif de transmission unidirectionnel (27 ; 54) associé à des moyens de rappel élastique et porté par l'arbre moteur (12 ; 41), par un élément de liaison (25 ; 52) adapté pour entraîner en rotation ledit organe rotatif et l'arbre moteur (12 ; 41), lors des déplacements de ladite manette (16 ; 43) selon une direction d'éloignement par rapport à l'assise (9),
- deux poignées (30, 31) articulées respectivement chacune vers l'extrémité supérieure d'une des manettes (18), de façon à pouvoir pivoter autour d'un axe longitudinal, lesdites poignées étant reliées à une barre de manoeuvre (36) solidaire du tube de direction (4) au moyen d'éléments de liaison (32-35) adaptés pour provoquer la rotation desdites barre de manoeuvre et tube de direction autour d'un axe vertical.

2. Engin selon la revendication 1, **caractérisé en ce que** les moyens d'actionnement comprennent, pour chaque pédale (17 ; 44) et chaque manette (18 ; 45), un chariot (15, 16 ; 43) monté coulissant le long du châssis (1 ; 38).

3. Engin selon la revendication 2, **caractérisé en ce que** les deux chariots (15 ; 43) de chaque paire de chariots sont reliés entre eux par un élément de liaison souple (20 ; 47) associé à un organe de renvoi (22 ; 48) solidaire du châssis (1 ; 38), disposé de façon à maintenir tendu ledit élément de liaison dans des positions des chariots (15 ; 43) où ces derniers sont situés symétriquement de part et d'autre du point médian de leur trajet.

4. Engin selon l'une des revendications 2 ou 3, **caractérisé en ce qu**'il comprend des éléments élastiques (28) de fin de course disposés de façon à servir de butée aux chariots (15) dans la position de ces derniers la plus éloignée de l'assise (9).

5. Engin selon l'une des revendications 2 à 4, **caractérisé en ce qu**'il comprend des éléments élastiques (60, 61) de fin de course disposés de façon à servir de butée aux chariots (15) dans la position de ces derniers la plus rapprochée de l'assise (9).

6. Engin selon l'une des revendications précédentes, **caractérisé en ce que** chaque organe rotatif de transmission unidirectionnel (26 ; 53) présente une forme sensiblement ovoïde, et est monté de façon excentrée sur l'arbre moteur (12 ; 41) de façon que la longueur du levier entre l'axe de rotation dudit arbre moteur et l'axe longitudinal de la force exercée sur les moyens d'entraînement (15 ; 43) soit inversement proportionnelle à la distance séparant les pédales (17 ; 44) et manettes (18 ; 45) de l'assise (9).

7. Engin selon la revendication 6, **caractérisé en ce que** chaque organe rotatif de transmission unidirectionnel (26 ; 53) est constitué d'une poulie de forme ovoïde reliée aux moyens d'actionnement (15, 16) par un câble (24 ; 51).

8. Engin selon l'une des revendications précédentes, **caractérisé en ce que** le plateau (13) est monté sur l'arbre moteur (12) par l'intermédiaire d'une roue libre adaptée pour permettre d'entraîner en rotation ledit arbre moteur uniquement lorsque l'engin est déplacé vers l'avant.

## Patentansprüche

1. Maschine, angetrieben mit Muskelkraft, wie insbesondere ein Fahrrad, umfassend :
- ein longitudinales Gestell (1 ; 38) mit, gegen das eine von seinen Enden, einem mit einer Rückenlehne (9a) versehenen Sitzplatz (9) und mit, gegen sein entgegengesetztes Ende, einem System von unabhängigen Pedalen (17 ; 44), das sich dafür eignet, mit den Füßen eines Benutzers in sitzender Stellung angetrieben zu werden, in welcher der Rücken des Benutzers durch die Rückenlehne (9a) gehalten wird, wobei das genannte System von Pedalen mit einer Antriebswelle (12 ; 41) durch zugeordnete Kraftübertragungsmittel verbunden ist, die sich für die Transformation der Bewegung dieses Systems von Pedalen in eine Drehbewegung der genannten Antriebswelle eignen,
* wobei das System von Pedalen zwei Pedale (17 ; 44) umfaßt, die mit dem Gestell (1 ; 38) durch Betätigungsmittel (15 ; 43) verbunden sind, welche sich dafür eignen, das Erteilen einer alternativen Verschiebung zu ihnen zu ermöglichen,
* wobei die Kraftübertragungsmittel, für jedes Pedal (17 ; 44), ein Drehelement (26 ; 53) für eine Kraftübertragung in eine Einwegrichtung umfassen, welches elastischen Rückzugsmitteln zugeordnet, von der Antriebswelle (12 ; 41) gehalten, und mit Betätigungsmitteln durch einem Verbindungselement (24 ; 51) verbunden ist, welches sich für das Drehantrieb des genannten Drehelements und der Antriebswelle (12 ; 41) bei Entfernungsbewegungen des genannten Pedals vom Sitzplatz (9) eignet,
- mindestens ein Antriebshinterrad (10) mit einer Achse mit einem freien Rad (11), verbunden durch eine Kette (14) mit mindestens einer Platte (13) aus einem Stück mit der Antriebswelle (12), und ein Vorrad (6) mit einer Achse, montiert an einer Gabel (5) aus einem Stück mit einem Steuerrohr (4),
wobei die genannte Maschine **dadurch gekennzeichnet** ist, daß sie umfaßt :
- zwei unabhängige Bedienungsgriffe (18 ; 45) mit manueller Betätigung, die mit dem Gestell (1 ; 38) durch Betätigungsmitteln (16 ; 43) verbunden sind, welche sich dafür eignen, das Erteilen einer alternativen Verschiebung zu ihnen zu ermöglichen, wobei die Betätigungsmittel jedes Bedienungsgriffs (18 ; 45) mit einem elastischen Rückzugsmitteln zugeordneten und von der Antriebswelle (12 ; 41) gehaltenen Drehelement (27 ; 54) für eine Kraftübertragung in eine Einwegrichtung durch ein Verbindungselement (25 ; 52) verbunden sind, welches sich für den Drehantrieb des genannten Drehelements und der Antriebswelle (12 ; 41) bei Entfernungsbewegungen des genannten Bedienungsgriffs (16 ; 43) vom Sitzplatz (9) eignet,
- zwei Handgriffe (30, 31), die jeweils nach dem Oberende des einen von den Bedienungsgriffen (18) gelenkig sind, so daß sie um eine Längsachse schwenkbar sind, wobei die genannte Bedienungsgriffe mit einem Betätigungsstab (36) aus einem Stück mit dem Steuerrohr (4) durch Verbindungselemente (32-35) verbunden sind, welche sich dafür eignen, die Drehung des genannten Betätigungsstabs und des genannten Steuerrohres um eine vertikale Achse zu bewirken.

2. Maschine nach Anspruch 1, **dadurch gekennzeichnet**, daß die Betätigungsmittel für jedes Pedal (17 ; 44) und für jeden Bedienungsgriff (18 ; 45) einen am Gestell (1 ; 38) gleitend montierten Sattel (15, 16 ; 43) umfassen.

3. Maschine nach Anspruch 2, **dadurch gekennzeichnet**, daß die beide Sättel (15 ; 43) jedes Paares von Sätteln durch ein flexibles Verbindungselement (20 ; 47) miteinander verbunden sind, welches einem Umlenkelement (22 ; 48) aus einem Stück mit dem Gestell (1 ; 38) zugeordnet, und angeordnet ist, so daß es das genannte Verbindungselement in Stellungen der Sättel (15 ; 43) gespannt haltet, in den diese symmetrisch auf beiden Seiten des Mittelpunkts ihres Wegs liegen.

4. Maschine nach einem der Ansprüche 2 oder 3, **dadurch gekennzeichnet**, daß sie elastische Endstellungselemente (28) umfaßt, die angeordnet sind, so daß sie als Anschlag für die Sättel (15) dienen, wenn diese in der fernsten Stellung bezüglich dem Sitzplatz (9) sind.

5. Maschine nach einem der Ansprüche 2 bis 4, **dadurch gekennzeichnet**, daß sie elastische Endstellungselemente (60, 61) umfaßt, die angeordnet sind, so daß sie als Anschlag für die Sättel (15) dienen, wenn diese in der nächsten Stellung bezüglich dem Sitzplatz (9) sind.

6. Maschine nach einem der vorhergehenden Ansprüche, **dadurch gekennzeichnet**, daß jedes Drehelement (26 ; 53) für eine Kraftübertragung in eine Einwegrichtung im wesentlichen eiförmig ist, und aus dem Zentrum an der Antriebswelle (12 ; 41) montiert ist, so daß die Länge des Hebels zwischen der Rotationsachse der genannten Antriebswelle und der Längsachse der Kraft an die Antriebsmittel (15 ; 43) umgekehrt proportional zum Trennungsabstand der Pedale (17 ; 44) und der Bedienungsgriffe (18 ; 45) vom Sitzplatz (9) ist.

7. Maschine nach Anspruch 6, **dadurch gekennzeichnet**, daß jedes Drehelement (26 ; 53) für eine Kraftübertragung in eine Einwegrichtung aus einer eiförmigen Rolle besteht, die mit den Betätigungsmitteln (15, 16) durch ein Kabel (24 ; 51) verbunden ist.

8. Maschine nach einem der vorhergehenden Ansprüche, **dadurch gekennzeichnet**, daß die Platte (13) an der Antriebswelle (12) durch eine freie Rolle montiert ist, die sich dafür eignet, den Drehantrieb der genannten Antriebswelle nur bei Vorwärtsbewegungen der Maschine zu ermöglichen.

## Claims

1. Man-propelled machine, such as notably a cycle-type machine, comprising :
- a longitudinal frame (1 ; 38) provided, about one of its ends, with a seat (9) provided with a back (9a) and, about its opposed end, with a system of independent pedals (17 ; 44) able to be activated by the feet of a user in a seated position in which the user's back is hold by the back (9a), said pedal system being associated to transmission means for its connection to a driving shaft (12 ; 41) which are able to transform the movement of this pedal system into a rotation movement of said driving shaft,
* the pedal system comprising two pedals (17 ; 44) connected to the frame (1 ; 38) by actuating means (15 ; 43) able to allow to impart an alternating translation movement to them,
* the transmission means comprising, for each pedal (17 ; 44), a rotative element for a unidirectional transmission (26 ; 53) which is associated to spring return means, supported by the driving shaft (12 ; 41) and connected to the actuating means by a linking element (24 ; 51) adapted to rotatively drive said rotative element and the driving shaft (12 ; 41), during movements of said pedal away from the seat (9),
- at least one rear driving wheel (10) provided with an axle provided with a free wheel (11) connected by a chain (14) to at least one plate (13), which is integral with the driving shaft (12), and a front wheel (6) provided with an axle mounted on a fork (5), which is integral with a direction tube (4),
said machine being **characterised in that** it comprises :
- two independent hand-actuated operating handles (18 ; 45), connected to the frame (1 ; 38) by actuating means (16 ; 43) able to allow to impart an alternating translation movement to them, the actuating means for each operating handle (18 ; 45) being connected to a rotative element for a unidirectional transmission (27 ; 54) associated to spring return means and supported by the driving shaft (12 ; 41), by a linking element (25 ; 52) adapted to rotatively drive said rotative element and the driving shaft (12 ; 41), during movements of said operating handle (16 ; 43) away from the seat (9),
- two handles (30, 31), each being hinged respectively to the upper end of one of the operating handles (18), so as to be able to rotate around a longitudinal axis, said handles being connected to a control bar (36), which is integral with the direction tube (4), by means of linking elements (32-35) adapted to cause said control bar and said direction tube to rotate around a vertical axis.

2. Machine according to claim 1, **characterised in that** the actuating means comprise, for each pedal (17 ; 44) and each operating handle (18 ; 45), a saddle (15, 16 ; 43) slidingly mounted on the frame (1 ; 38).

3. Machine according to claim 2, **characterised in that** both saddles (15 ; 43) of each pair of saddles are connected one to another by a flexible linking element (20 ; 47) associated to a return element (22 ; 48), which is integral with the frame (1 ; 38) and arranged so as to hold tight said linking element in positions of the saddles (15 ; 43) in which these are placed symmetrically on both sides of the median point of their stroke.

4. Machine according to one of claims 2 or 3, **characterised in that** it comprises spring stroke-end elements (28) arranged so as to serve as a stop for the saddles (15) in the remotest position thereof from the seat (9).

5. Machine according to any one of claims 2 to 4, **characterised in that** it comprises spring stroke-end elements (60 ; 61) arranged so as to serve as a stop for the saddles (15) in the closest position thereof to the seat (9).

6. Machine according to any one of the preceding claims, **characterised in that** each rotative element for a unidirectional transmission (26 ; 53) has a substantially ovoid shape, and is mounted out of centre on the driving shaft (12 ; 41) such that the length of the leverage between the rotation axis of said driving shaft and the longitudinal axis of the force applied onto the actuating means (15 ; 43) is inversely proportional to the distance separating the pedals (17 ; 44) and operating handles (18 ; 45) from the seat (9).

7. Machine according to claim 6, **characterised in that** each rotative element for a unidirectional transmission (26 ; 53) is composed of an ovoid pulley connected to actuating means (15, 16) by a cable (24 ; 51).

8. Machine according to any one of the preceding claims, **characterised in that** the plate (13) is mounted on the driving shaft (12) via a free wheel adapted to enable to rotatively drive said driving shaft only during forward movements of the machine.
